# EUROPÄISCHE PATENTANMELDUNG

(11) **EP 3 623 655 A1**
(43) Veröffentlichungstag der Anmeldung: **18.03.2020**
(21) Anmeldenummer: 18194937.1
(22) Anmeldetag: 17.09.2018
(51) Int. Cl.: F16C 41/00, F16D 55/02, F16D 59/02, F16D 65/14

(54) **LAGERANORDNUNG MIT EINER BREMSVORRICHTUNG**

(71) Anmelder: Ondal Medical Systems GmbH, 36088 Hünfeld (DE)
(72) Erfinder: Stroop, Nicolas, 36037 Fulda (DE)
(74) Vertreter: Graf von Stosch Patentanwaltsgesellschaft mbH

(57) **Zusammenfassung**

Die Erfindung betrifft eine Lageranordnung (10) mit wenigstens einem ersten Lagerelement (12) und einem zweiten Lagerelement (14), welche entlang einer gemeinsamen Längsachse (16) relativ rotierbar zueinander miteinander verbunden sind, wobei die Lageranordnung (10) eine Bremsvorrichtung (24) umfasst, welche die relative Rotation der beiden Lagerelemente (12, 14) zueinander hemmt, wobei die Bremsvorrichtung (24) ein mit dem ersten Lagerelement (12) verbundenes Bremselement (26), eine mit dem zweiten Lagerelement (14) verbundene Gegenfläche (34) und wenigstens ein Federelement (44) umfasst, welches das Bremselement (26) zur Erzeugung eines Reibschlusses gegen die Gegenfläche (34) mit einer Federkraft presst, und eine betätigbare Verstellvorrichtung (42), mittels welcher eine Anpresskraft, mit welcher das Bremselement (26) gegen die Gegenfläche (34) gepresst wird, reduzierbar ist, wobei die Gegenfläche (34) auf einer quer, insbesondere rechtwinkelig, zur Wirkrichtung der Anpresskraft ausgerichteten Verlängerung (38) des zweiten Lagerelements (14) ausgebildet, wobei die Verlängerung (38) einstückig mit dem zweiten Lagerelement (14) ausgebildet ist.

## Beschreibung

Die Erfindung betrifft eine Lageranordnung, insbesondere mit einer Bremsvorrichtung.

Bei bekannten elektromagnetisch betätigten Lagereinheiten wird eine Ankerplatte mit einem aufgebrachten Reibbelag durch vorgespannte Druckfedern gegen eine Gegenfläche, beispielsweise eine Druckplatte, gepresst, um eine Bewegung, insbesondere Rotation, jeweiliger Lagerelemente zueinander zu hemmen. Die Ankerplatte ist rotationsfest mit einem ersten Gehäuseteil verbunden, welches als Stator ausgebildet sein kann. Die Druckplatte ist rotationsfest mit einem zweiten Gehäuseteil verbunden, welches auch als Rotor ausgebildet sein kann. Der Reibbelag kann dabei sowohl an der Ankerplatte, als auch an der Druckplatte angebracht sein.

In einem gebremsten Zustand erzeugt die durch die Anpresskraft der Druckfedern erzeugte Reibung ein Bremsmoment. Das Bremsmoment verhindert beispielsweise eine unbeabsichtigte Bewegung eines Tragarmsystems, welches mittels der Lagereinheit wenigstens bezüglich eines rotatorischen Freiheitsgrad beweglich gehalten ist. Bei einer elektromagnetischen Betätigung der Lagereinheit, welche auch als Aktivierung oder Lüften der Bremse bezeichnet werden kann, wird ein starker Elektromagnet, welcher beispielsweise fest mit dem Stator verbunden ist, mit einem Strom beaufschlagt. Das entstehende Magnetfeld wirkt der Druckkraft der Federn entgegen und zieht die Ankerplatte an. Das Anpressen des Reibbelags wird dadurch beendet und Stator und Rotor lassen sich dann mit geringem Kraftaufwand gegeneinander verdrehen. Charakteristisch bei diesem Wirkprinzip ist, dass die Anpresskraft, welche das Bremsmoment verursacht, der Kraft entspricht, welcher der Elektromagnet zum Lüften der Bremse erzeugen muss. Bei einem hohen Bremsmoment muss der Elektromagnet also entsprechend stark dimensioniert sein und die Ströme innerhalb einer Spule des Elektromagneten sind entsprechend groß. Ebenso ist der Spalt zwischen Elektromagnet und Ankerplatte für die Funktion bei hohen Bremsmomenten ausschlaggebend, da die magnetische Kraft mit dem Abstand zum Magneten stark abnimmt. Dies stellt hohe Anforderungen an die Fertigungsgenauigkeit und den Montageaufwand, insbesondere um den Spalt gering zu halten. Beispielsweise wird zur Einstellung des Spalts ein aufwendig zu fertigendes Feingewinde mit geringer Steigung zwischen Druckplatte und Gehäuse vorgesehen.

Die Lage der Druckplatte am Feingewinde wird dabei nach einer Positionseinstellung mittels eines Klebstoffes fixiert, was eine Wartung sehr aufwendig macht. Auch die Positionseinstellung selber muss sehr präzise sein, damit der Spalt passgenau ist. Andernfalls kann die durch den Magnet erzeugte Magnetkraft aufgrund eines zu hohen Abstands zu schwach sein, um der Federkraft ausreichend zum Aufheben der Bremswirkung entgegen wirken zu können. Bei einem zu kleinen Abstand kann dagegen beispielweise ein ungewollter schleifender Kontakt entstehen, welcher das Lager beschädigt. Zudem kann dann die Ankerplatte gegebenenfalls nicht mehr weit genug von einer dem Bremsbelag korrespondierenden Gegenfläche abheben und damit auch bei einem Lüften der Bremse noch eine zu hohe Reibkraft bei relativer Rotation der jeweiligen Lagerelemente entstehen.

Eine weitere bekannte konstruktive Lösung zum Festsetzen oder Bremsen einer Lagereinheit ist die Verwendung eines elastischen Druckschlauches, welcher durch eine Beaufschlagung mit einem pneumatischen Innendruck expandiert. Die Expansion führt zu einer Anpresskraft auf Rotor und Stator und erzeugt an den Wirkflächen eine Reibkraft, welche die Drehbewegung hemmt. Der Druckschlauch kann also beispielsweise die Funktion der Federn und des Elektromagneten übernehmen. Nachteilig bei dieser Lösung ist, dass bei Bewegung eines mittels der Lagereinheit gelagerten Tragarmsystems bei ungelöster Bremse ein abrasiver Verschleiß an den relativ bewegten Wirkflächen des Druckschlauchs, welcher auch als Pneumatikschlauch bezeichnet wird, auftritt. Dieser abrasive Verschleiß kann zu einer Undichtigkeit des Druckschlauchs, welcher auch als Bremsschlauch bezeichnet wird, führen. Die Lebensdauer der Lagereinheit kann somit gering sein und/oder jeweilige Wartungsintervalle kurz. Ein ähnlicher Effekt kann durch Risse an jeweiligen Crimpstellen des elastischen Schlauches, an welchen dieser befestigt ist, auftreten. Die Wartung eines defekten Bremsschlauchs ist ein aufwendiger Serviceeinsatz.

Eine dritte bekannte konstruktive Lösung zum Festsetzen oder Bremsen einer Lagereinheit ist eine Friktionsbremseinheit, welche nicht lösbar ist. Hierbei wird ein dauerhaftes Bremsmoment zwischen Rotor und Stator erzeugt, welches vom Bediener nicht gelöst werden kann. Üblicherweise ist das Bremsmoment dabei so hoch gewählt, dass eine Bewegung eines mit der Lagereinheit gelagerten Tragarmsystems dennoch möglich ist, ungewollte Bewegungen aber relativ zuverlässig verhindert werden. Bei einigen Ausführungsformen ist dieses Bremsmoment nicht einstellbar, ändert sich mit fortschreitendem Verschleiß der Reibflächen und ist dann nicht mehr korrigierbar.

Den beschriebenen Lagereinheiten ist zudem gemein, dass sich diese durch eine hohe Variantenvielfalt von Bauteilen und Baugruppen auszeichnen. Auch dadurch sind diese Lagereinheiten teuer und aufwendig zu warten.

Beispielsweise ist eine elektromagnetisch betätigbare Lagereinheit in der EP 2 140 158 B1 beschrieben.

Aufgabe der vorliegenden Erfindung ist es, eine Lageranordnung zu schaffen, welche besonders kostengünstig zu fertigen und insbesondere einfach zu montieren ist.

Diese Aufgabe wird erfindungsgemäß durch eine Lageranordnung mit den Merkmalen des unabhängigen Patentanspruchs gelöst. Vorteilhafte Ausgestaltungen der Erfindung sind mit den jeweiligen Unteransprüchen angegeben.

Die Erfindung betrifft eine Lageranordnung mit wenigstens einem ersten Lagerelement und einem zweiten Lagerelement, welche entlang einer gemeinsamen Längsachse relativ rotierbar zueinander miteinander verbunden sind. Die Lageranordnung kann eine Bremsvorrichtung umfassen, welche die relative Rotation der beiden Lagerelement zueinander mittels einer durch die Bremsvorrichtung erzeugten Reibkraft hemmt. Die Bremsvorrichtung kann ein mit dem ersten Lagerelement verbundenes Bremselement, eine mit dem zweiten Lagerelement verbundene Gegenfläche und wenigstens ein Federelement umfassen. Das Federelement kann dazu ausgebildet sein, das Bremselement zur Erzeugung eines Reibschlusses gegen die Gegenfläche mit einer Federkraft zu pressen. Vorzugsweise ist dafür das wenigstens eine Federelement vorgespannt verbaut. Aus dem Reibschluss resultiert die Reibkraft bei einer relativen Bewegung der Lagerelemente zueinander.

Verbunden kann dabei bedeuten, dass die jeweiligen Teile drehfest beziehungsweise rotationsfest mit dem jeweiligen Lagerelement verbunden sind. Die Gegenfläche kann auch derart mit dem zweiten Lagerelement verbunden sein, als dass sie an oder als einer deren Oberflächen ausgebildet ist. Beispielsweise kann sich die Gegenfläche mit dem zweiten als Rotor ausgebildeten Lagerelement mitbewegen, wenn dieses relativ zu dem Stator bewegt wird. Das Bremselement kann dagegen bei einer solchen Bewegung des Rotors beispielsweise ortsfest gemeinsam mit dem als Stator ausgebildeten ersten Lagerelement in seiner Position verbleiben. Das Bremselement und die Gegenfläche können so reibend aneinander abgleiten und erzeugen damit aufgrund des Reibschlusses die der Rotation entgegenwirkende Reibkraft. Das jeweilige mit dem Bremselement verbundene beziehungsweise mit der Gegenfläche verbundene Lagerelement kann dabei auch als zugeordnetes Lagerelement bezeichnet werden. Die Gegenfläche kann dabei einfach als eine dem Bremselement zugewandte Oberfläche des zweiten Lagerelements ausgebildet sein oder auch als separates daran fixiertes Teil, beispielsweise ebenfalls als Bremselement. Jeweilige Bremselemente können beispielsweise als Bremsbeläge ausgebildet sein, um einen hohen Reibkoeffizient beim Abgleiten aufzuweisen. Die Bremsbeläge können dabei beispielsweise mit den jeweiligen Lagerelementen mittels einer Verklebung oder Verschraubung verbunden sein.

Vorzugsweise kann die Lageranordnung zudem eine betätigbare Verstellvorrichtung umfassen. Mittels der Verstellvorrichtung kann eine Anpresskraft, mit welcher das Bremselement aufgrund des Federelements gegen die Gegenfläche gepresst wird, reduziert werden. Damit kann die bei der relativen Rotation der beiden Lagerelemente zueinander wirkende Bremskraft modifiziert werden. Die Verstellvorrichtung kann dabei die Anpresskraft lediglich reduzieren, um so die Stärke der Hemmung der Rotation der jeweiligen Lagerelemente einzustellen. Alternativ oder zusätzlich kann die Verstellvorrichtung auch als Kupplung fungieren, welche den Reibschluss aufhebt und damit die Hemmung deaktiviert. Dann können die beiden Lagerelemente mit geringem Kraftaufwand relativ zueinander schnell und einfach rotiert werden. Beispielsweise muss dann nur noch die inhärente Reibung der Lageranordnung überwunden werden. Ist die Lageranordnung beispielsweise als Wälzlager ausgebildet, muss nur noch die Wälzreibung der Lagerelemente an den Wälzkörpern überwunden werden. Aufgrund der Vorspannung durch das wenigstens eine Federelement kann dabei der Reibschluss selbsttätig wieder hergestellt werden, sobald die Verstellvorrichtung nicht mehr betätigt ist.

Die Verstellvorrichtung kann beispielsweise einen Aktuator umfassen, mittels welchem die Anpresskraft reduziert wird, welche also der Federkraft des wenigstens einen Federelements entgegen gewirkt wird. Beispielsweise kann der Aktuator einen Elektromagneten oder einen Druckschlauch umfassen. Mittels des Aktuators kann die Bremse der Lageranordnung dann beispielsweise elektrisch oder pneumatisch gelüftet werden. Die maximale Anpresskraft und/oder Reibung kann durch die Anpresskraft jeweiliger Federelemente und die Materialpaarung des Reibelements und der Gegenfläche vorgegeben sein. Die Verstellvorrichtung dient zur zeitweisen Reduktion der Bremskraft bzw. zeitweisen Aufhebung des Bremsens und kann entsprechend gemäß der Anpresskraft jeweiliger Federelemente dimensioniert sein.

Das Federelement kann beispielsweise als Druckfeder ausgebildet sein, insbesondere als Schraubenfeder oder Tellerfeder. Die Federkraft wirkt dabei vorzugsweise im Wesentlichen normal zur Gegenfläche und/oder zu einer Reibfläche des Reibelements, welche bei Reibschluss in Kontakt mit der Gegenfläche ist. Die Gegenfläche und das Reibelement können plane parallele korrespondierende Reibflächen ausbilden.

Vorzugsweise ist die Gegenfläche auf einer quer, insbesondere rechtwinkelig zur Wirkrichtung der Anpresskraft ausgerichteten Verlängerung des zweiten Lagerelements ausgebildet. Die Ausrichtung der Verlängerung ergibt sich dabei beispielsweise durch eine Haupterstreckungsrichtung der Verlängerung und ist vorzugsweise parallel zur Gegenfläche. Die Verlängerung kann beispielsweise daran erkennbar sein, dass diese außer zur Ausbildung der Gegenfläche keinem weiteren Zweck bei der Lageranordnung dient. Beispielsweise kann die Lageranordnung auch ein voll funktionsfähiges Lager ohne die Verlängerung bilden, abgesehen von der Hemmung der Rotation. Die Verlängerung ist vorzugsweise einstückig mit dem zweiten Lagerelement ausgebildet.

Durch die Verlängerung kann auf eine separat einzusetzende Druckplatte verzichtet werden. Insbesondere entfällt dadurch die aufwendige Montage an einem Feingewinde, das Einstellen des Spalts zwischen Ankerplatte und Elektromagnet sowie das Verkleben nach dieser Einstellung. Die Durchlaufzeit bei der Herstellung kann, insbesondere durch so entfallene Aushärtzeiten eines Klebstoffs, stark reduziert sein. So kann die Montage und Fertigung besonders kostengünstig sein. Auch die Fertigung eines Gewindes in einem der jeweiligen Lagerelemente ist so überflüssig. Zudem kann die Lageranordnung so auch ohne spezielle Schulung einfach montiert werden, da der Spalt im Wesentlichen konstruktiv vorgegeben ist und nicht eingestellt werden muss. So ist der Einbau der Lageranordnung für deren Käufer besonders einfach.

Aufgrund der Verlängerung kann der Durchmesser im Bereich des Reibschlusses der Lageranordnung, also im Bereich von Gegenfläche und Reibelement, besonders groß sein. Dadurch können jeweilige bei Reibschluss in Kontakt stehende Reibflächen besonders groß sein. Dadurch kann bei ansonsten gleichbleibenden Reibmoment gegenüber herkömmlichen Lageranordnungen der benötigte Anpressdruck besonders gering sein. Entsprechend kann die Flächenpressung zwischen Gegenfläche und Reibelement besonders gering sein. Dadurch kann ein abrasiver Verschleiß reduziert sein. Jeweilige Federelemente können schwächer dimensioniert sein, wodurch der benötigte Bauraum reduziert sein kann. Entsprechend kann auch die Verstellvorrichtung weniger Kraft zum Entgegenwirken gegen die Anpresskraft benötigen. Dadurch kann ein Aktuator schwächer dimensioniert sein und entsprechend klein und kostengünstig sein. Beispielsweise kann ein Elektromagnet kleiner dimensioniert sein, wodurch auch eine benötigte Länge eines Kupferlackdrahtes reduziert sein kann. Entsprechend kann auch die benötigte Leistung zum Lüften der Bremse geringer ausfallen, womit beispielsweise ein Netzteil kleiner dimensioniert sein kann. Auch die genaue Einhaltung des minimalen Spalts ist so weniger relevant. Beispielsweise kann der Elektromagnet auch so stark dimensioniert sein, dass auch bei einem aufgrund von Fertigungstoleranzen ungewöhnlich großen Spalt die Bremse zuverlässig gelüftet werden kann. Dabei kann der Elektromagnet dennoch aufgrund der geringeren notwendigen Anpresskraft genauso stark oder schwächer sein als bei einer Lageranordnung, bei welcher der Spalt mittels einer Druckplatte und Feingewinde einstellbar ist.

Eine axiale Richtung der Lageranordnung kann durch dessen Längsachse vorgegeben sein. Eine radiale Richtung kann beispielsweise durch eine Richtung quer, insbesondere rechtwinkelig, zur Längsachse definiert sein. Radial nach innen kann radial in Richtung hin zu der Längsachse definiert sein und radial nach außen in Richtung von der Längsachse weg.

In weiterer vorteilhafter Ausgestaltung der Lageranordnung ist es vorgesehen, dass das Bremselement eine Ankerscheibe und eine darauf ausgebildete Reibfläche umfasst, wobei die Ankerscheibe mittels wenigstens eines Führungselements verdrehfest aber axial entlang der Längsachse beweglich mit dem ersten Lagerelement verbunden ist. Die Reibfläche kann dabei in Form eines Reibbelags auf der Ankerscheibe ausgebildet sein. Durch die Bauweise mit Ankerscheibe kann die Bremse der Lageranordnung einfach und zuverlässig gelüftet werden, insbesondere mit einfachen Aktuatoren wie einem Elektromagneten. Die Reibfläche kann hier beispielsweise durch einen auf der Ankerscheibe aufgeklebten oder aufgeschraubten Reibbelag ausgebildet sein, sodass diese bei Verschleiß einfach ersetzt werden kann. Gegebenenfalls kann aber auch ein Austausch der Ankerscheibe erfolgen, welche dazu von jeweiligen Führungselementen bei zerlegtem Lager einfach abgezogen werden kann. Jeweilige Führungselemente können beispielsweise als Führungsbolzen ausgebildet sein, welche in korrespondierenden Durchgangsöffnungen der Ankerscheibe angeordnet sind. Die Führungsbolzen können auch als Passstifte ausgebildet sein. Die Haupterstreckungsrichtung der Führungsbolzen ist vorzugsweise in axialer Richtung entlang der Längsachse ausgerichtet. Die Führungsbolzen führen so die Bewegung der Ankerscheibe entlang der Längsachse in axialer Richtung. Die Ankerscheibe kann beispielsweise auch als Ankerplatte ausgebildet sein.

In weiterer vorteilhafter Ausgestaltung der Lageranordnung ist es vorgesehen, dass die Verstellvorrichtung einen Elektromagneten umfasst, mittels welchem die Ankerscheibe entgegen der Federkraft axial bewegbar ist. Ein Elektromagnet ist ein besonders wartungsarmer, robuster und kostengünstiger betätigbarer Aktuator. Vorzugsweise ist die Ankerscheibe aus einem Material, welches von dem durch den Elektromagneten erzeugbaren Magnetfeld angezogen wird. Der Elektromagnet ist vorzugsweise bei Reibschluss der Bremsvorrichtung axial beabstandet von der Ankerscheibe auf einer der Gegenfläche abgewandten Seite angeordnet. Durch Einschalten des Elektromagnets wird die Ankerscheibe dann zu dem Elektromagneten gezogen und damit die Ankerscheibe von der Gegenfläche axial weggezogen. Dadurch kann der Reibschluss aufgehoben werden oder aber auch die Anpresskraft des Reibelements auf die Gegenfläche reduziert werden, um so eine Hemmung der relativen Rotation der beiden Lagerelemente zueinander aufzuheben bzw. zu reduzieren.

In weiterer vorteilhafter Ausgestaltung der Lageranordnung ist es vorgesehen, dass das wenigstens eine Federelement im Wesentlichen auf dem gleichen Durchmesser wie das wenigstens eine Führungselement angeordnet ist. Dadurch kann die Lageranordnung besonders kompakt sein. Zudem können dabei jeweilige Führungselemente auch als jeweilige Führungen jeweiliger Federelemente dienen. Beispielsweise kann so eine Schraubenfeder durch einen in ihrem Zentrum angeordneten Führungsbolzen gegen Knicken geschützt werden. Der Durchmesser kann dabei in Bezug auf die Längsachse, insbesondere den radialen Abstand dazu, definiert sein. Die jeweiligen Federelemente können also im Wesentlichen den gleichen radialen Abstand zur Längsachse wie jeweilige Führungselemente aufweisen. Vorzugsweise sind die jeweiligen Federelemente und jeweiligen Führungselemente auch in Umfangsrichtung an korrespondierenden Positionen angeordnet, womit sich dann die bereits beschriebene Abstützung bzw. Führung der Federelemente ergeben kann. Vorzugsweise ist dabei pro Federelement ein Führungselement vorgesehen. Vorzugsweise sind die Führungselemente als Zapfen bzw. Führungsbolzen ausgebildet, um die jeweils die als Schraubenfedern ausgebildeten Federelemente angeordnet sind

In weiterer vorteilhafter Ausgestaltung der Lageranordnung ist es vorgesehen, dass eines der beiden Lagerelement als Innenring und das andere der beiden Lagerelement als Außenring ausgebildet ist. Dadurch kann die Teilezahl der Lageranordnung besonders gering sein. Zum Beispiel kann die Lageranordnung als Wälz- oder Gleitlager ausgebildet sein. Vorzugsweise ist das zweite Lagerelement als Innenring ausgebildet, da so die radiale Größe der Lageranordnung trotz der Verlängerung nicht vergrößert sein muss. Die Verlängerung kann dabei beispielsweise als Teilbereich des Innenrings ausgebildet sein, welcher sich axial weiter erstreckt als der Außenring und dort radial über den restlichen Innenring hinaussteht. Dadurch ergibt sich eine zumindest teilweise axiale Überdeckung zwischen Verlängerung und Außenring. Vorzugsweise erstreckt sich die Verlängerung im Wesentlichen höchstens genauso weit radial wie der Außenring.

In weiterer vorteilhafter Ausgestaltung der Lageranordnung ist es vorgesehen, dass die Verlängerung als Absatz an dem zweiten Lagerelement, insbesondere an dem als Innenring ausgebildeten zweiten Lagerelement, ausgebildet ist. Ein Absatz kann besonders kostengünstig und einfach zu fertigen sein, beispielsweise wenn das zweite Lagerelement ein Drehteil ist.

In weiterer vorteilhafter Ausgestaltung der Lageranordnung ist es vorgesehen, dass ein Übergang zwischen der Verlängerung und dem übrigen zweiten Lagerelement gekrümmt oder winkelig ausgebildet ist. Beispielsweise kann also die als Absatz ausgebildete Verlängerung in das übrige zweite Lagerelement gekrümmt oder mit einer scharfen Kante, Einkerbung und/oder Fase übergehen. Der winklige Übergang ist dabei besonders kostengünstig zu fertigen, insbesondere auf einer Drehmaschine. Zudem ist dieser sehr bauraumsparend. Der winklige Übergang kann auch nach Art einer Fase ausgebildet sein. Der gekrümmte Übergang kann besonders hohe Lasten aufnehmen. Dadurch kann die Verlängerung beispielsweise in axialer Richtung dünner sein, sodass die Lageranordnung besonders kompakt sein kann, insbesondere in axialer Richtung.

In weiterer vorteilhafter Ausgestaltung der Lageranordnung ist es vorgesehen, dass sich die Verlängerung und/oder die Gegenfläche radial, insbesondere im rechten Winkel zur Längsachse, mit ihrer Haupterstreckungsfläche erstrecken. Dadurch ergibt sich ein besonders vorteilhafter Kraftfluss und auch Ausrichtung bezüglich jeweiliger Reibkräfte. Zudem kann die Lageranordnung so besonders kompakt sein.

In weiterer vorteilhafter Ausgestaltung der Lageranordnung ist es vorgesehen, dass die Gegenfläche und/oder eine korrespondierende Reibfläche des Reibelements in einem radial äußeren Bereich der Lageranordnung angeordnet sind. Dadurch ergibt sich ein besonders großer Hebelarm bezüglich der Längsachse und damit ein besonders großes der relativen Bewegung der beiden Lagerelemente entgegenwirkendes hemmendes Moment aufgrund der Reibkraft. Dadurch können die Verlängerung und/oder jeweilige Reibflächen besonders klein sein. Zudem kann so die notwendige Anpresskraft bei gleichem hemmenden Moment besonders klein sein, wodurch sich Vorteile hinsichtlich der Dimensionierung der Bremsvorrichtung und der Verstellvorrichtung, insbesondere dessen Aktuators und dem Spalt, ergeben. Vorzugsweise sind die Gegenfläche und/oder die korrespondierende Reibfläche des Reibelements in einem radial äußersten Bereich der Lageranordnung angeordnet.

In weiterer vorteilhafter Ausgestaltung der Lageranordnung ist es vorgesehen, dass sich das zweite Lagerelement, insbesondere dessen Verlängerung, im Wesentlichen radial nach außen höchstens genauso weit erstreckt wie das erste Lagerelement und/oder das Bremselement, insbesondere dessen Ankerscheibe. Dadurch ergibt sich eine besonders kompakte Bauweise der Lageranordnung aufgrund der axialen Überdeckung. Vorzugsweise erstreckt sich der Innenring radial so weit nach außen wie der Außenring. Der Innenring kann sich radial weiter nach innen als der Außenring erstrecken.

In weiterer vorteilhafter Ausgestaltung der Lageranordnung ist es vorgesehen, dass die Verstellvorrichtung eine Anzeigevorrichtung umfasst, welche dazu ausgebildet ist, eine Betätigung der Verstellvorrichtung anzuzeigen. Die Anzeigevorrichtung ist vorzugsweise gemeinsam mit dem Elektromagneten der Verstellvorrichtung an dem ersten Lagerelement angeordnet. Mit der Anzeigevorrichtung kann ein Benutzer einfach erkennen, ob die Rotation gerade gehemmt ist oder nicht bzw. ob die Bremse gelüftet ist oder nicht. Beispielsweise kann die Anzeigevorrichtung eine Lampe, insbesondere eine LED, umfassen, welche bei Betätigung der Verstellvorrichtung aufleuchtet. Beispielsweise kann die LED in dem Stromkreis des Elektromagneten integriert sein und automatisch mit Strom versorgt werden und deswegen aufleuchten, sobald der Elektromagnet mit Strom versorgt wird. Die Nicht-Betätigung kann beispielsweise dadurch angezeigt werden, dass die LED nicht leuchtet oder in einer anderen Farbe leuchtet.

Durch das gemeinsame Anbringen des Aktuators der Verstellvorrichtung und der Anzeigevorrichtung an dem gleichen Lagerelement können diese besonders einfach zur Anzeige der Betätigung miteinander gekoppelt werden. Insbesondere können aufgrund der Verlängerung eine Spule des Elektromagneten und die Anzeigevorrichtung problemlos gemeinsam im Außenring verbaut werden, sodass die Anzeigevorrichtung ohne umfangreiche Verkabelung an einer Außenseite sichtbar an der Lageranordnung angeordnet sein kann. Dadurch befinden sich die beiden elektrischen Bauteile in dem gleichen rotatorischen Bezugssystem. Befinden sich die beiden elektrischen Bauteile dagegen in unterschiedlichen Lagerelementen, müssen diese entweder einzeln und unabhängig voneinander kontaktiert oder mit einem aufwendigen Schleifkontakt elektrisch verbunden werden. Vorliegend ist es jedoch möglich, beide elektrisch anzusteuernde Bauelemente in bzw. an einem Bauteil einzubringen. Der Verkabelungsaufwand wird hiermit reduziert und die Montage von empfindlichen Elektronikkomponenten wird auf eine einzelne Baugruppe bzw. eines der beiden Lagerelemente reduziert.

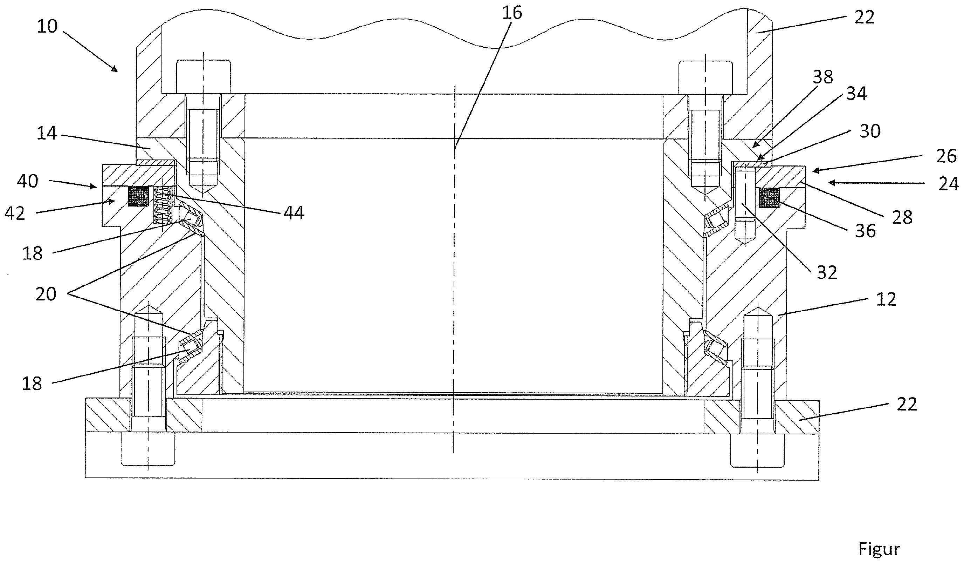

Weitere Merkmale der Erfindung ergeben sich in den Ansprüchen, dem Ausführungsbeispiel sowie anhand der Zeichnung. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt die einzige Figur in einer Schnittansicht eine Lageranordnung.

Die Figur zeigt in einer Schnittansicht einen Teil einer Lageranordnung 10, welche ein erstes als Außenring ausgebildetes Lagerelement 12 und ein zweites als Innenring ausgebildetes Lagerelement 14 umfasst. Die Lageranordnung 10 ist vorliegend als ein Axial-Schrägrollenlager ausgebildet, kann aber auch als andere Lagerbauform ausgebildet sein. Das erste Lagerelement 12 bildet dabei auch wenigstens einen Teil eines Lagergehäuses. Zusätzlich kann auch eine Abdeckung vorgesehen sein. Alternativ oder zusätzlich wird das Gehäuse dabei komplett durch die Abdeckung gebildet, in welcher dann das erste Lagerelement 10 vollständig oder nahezu vollständig aufgenommen ist. Dadurch kann ein unbeabsichtigtes Berühren der Lageranordnung 10 zuverlässig verhindert werden. Die Lageranordnung 10 ist dabei als Wälzlager ausgebildet, bei welchem die beiden Lagerelemente 12, 14 um die Längsachse 16 relativ zueinander rotiert werden können. Die beiden Lagerelemente 12, 14 rollen dabei an jeweiligen Wälzkörper 18 aneinander ab, welche hier als zylindrische Körper ausgebildet sind und mit jeweiligen Lagerringen 20 eingefasst sind, welche auch als Laufscheiben bezeichnet werden können. Vorliegend bildet der Außenring dabei einen Stator, welcher beispielsweise an einem Boden oder einer Decke befestigt ist, vorliegend mittels einer Anschlusskonstruktion 22. Der Innenring bildet einen Rotor, an welchem eine weitere Anschlusskonstruktion 22 befestigt ist, beispielsweise in Form eines Auslegers. Die jeweiligen Anschlusskonstruktionen 22 sind vorliegend mittels jeweiliger Verschraubungen mit dem jeweils zugeordneten Lagerelement 12, 14 lösbar verbunden. Selbstverständlich ist auch eine umgekehrte Bauweise möglich, bei welcher der Innenring den Stator bildet und der Außenring den Rotor.

Die Lageranordnung 10 weist zudem eine Bremsvorrichtung 24 auf, welche die relative Rotation der beiden Lagerelemente 12, 14 zueinander hemmen kann. Dafür weist die Bremsvorrichtung 24 ein Bremselement 26 auf, welches vorliegend eine Ankerplatte 28 und einen darauf aufgeklebten Bremsbelag 30 umfasst. Die Ankerplatte 28 ist dabei axial beweglich mittels jeweiliger Führungsbolzen 32 rotationsfest mit dem ersten Lagerelement 12 aber axial beweglich zu diesem verbunden. Die Führungsbolzen 32 sind hierzu beispielsweise in Löchern des ersten Lagerelements 12 eingeschraubt und eingepresst und erstrecken sich durch korrespondierende Durchgangsöffnungen der Ankerplatte 28. Dadurch ist eine axiale Bewegung der Ankerplatte 28 geführt. Die Führungsbolzen 32 sind dabei gleichmäßig über den Umfang angeordnet.

Die axiale Richtung ist vorliegend durch die Längsachse 16 vorgegeben, die radiale Richtung ist rechtwinkelig zu der Längsachse 16 definiert.

Weiterhin ist ein Federelement 44 gezeigt, welches die Ankerplatte 28 mit dem Reibbelag 30 gegen eine Gegenfläche 34 des zweiten Lagerelements 14 presst. Vorliegend ist das Federelement 44 als Schraubendruckfeder ausgebildet. Die Anpresskraft bewirkt dabei einen Reibschluss, welcher der relativen Rotation der beiden Lagerelemente 12, 14 entgegenwirkt. Die Gegenfläche 34 ist vorliegend einfach die dem Reibbelag 30 zugewandte und mit diesem in dem in der Figur dargestellten Zustand kontaktierte Oberfläche eines Teilbereichs des zweiten Lagerelements 14. Vorzugsweise umfasst die Lageranordnung 10 bzw. die Bremsvorrichtung 24 mehrere Federelemente 44, welche über den Umfang verteilt angeordnet sind, insbesondere regelmäßig zueinander beabstandet. Die jeweiligen Federelemente 44 können jeweils um einen zugeordneten jeweiligen Führungsbolzen 32 herum angeordnet sein, um diese gegen Knicken zu schützen und sowohl die Anzahl benötigter Aufnahmebohrungen als auch insgesamt den Bauraumbedarf der Lageranordnung 10 gering zu halten.

Um die beiden Lagerelemente 12, 14 schnell und mit einem geringen Kraftaufwand relativ zueinander verdrehen zu können, umfasst die Lageranordnung 10 zudem eine Verstellvorrichtung 42. Die Verstellvorrichtung 42 umfasst einen Elektromagneten 36, welcher in einer Vertiefung des ersten Lagerelements 12 angeordnet ist. Bei einer Beaufschlagung mit Strom zieht dieser Elektromagnet 36 die Ankerplatte 28 entgegen der Anpresskraft der Federelemente 44 zu sich axial heran, wobei diese Bewegung durch die Führungsbolzen 32 geführt ist. Dadurch wird der Reibschluss zwischen Reibbelag 30 und Gegenfläche 34 aufgehoben und die beiden Lagerelemente 12, 14 können im Wesentlichen ungehemmt relativ zueinander rotieren. Durch den Elektromagneten 36 kann die Ankerplatte 28 von der Gegenfläche 34 abgehoben werden und Innenring und Außenring sind frei gegeneinander beweglich. Dies wird auch als elektromagnetische Lüftung der Bremse bezeichnet.

Die Gegenfläche 34 ist dabei an einer einstückigen Verlängerung 38 des Innenrings bzw. des zweiten Lagerelements 14 ausgebildet. Die Verlängerung 38 bildet dabei einen Absatz gegenüber dem restlichen Lagerelement 14. Dieser Absatz erstreckt sich axial über das erste Lagerelement 12 bzw. den Außenring hinaus. Dadurch kann sich die Verlängerung 38 bzw. dieser Absatz in diesem axialen Bereich weiter radial als der restliche Innenring erstrecken. Vorliegend erstreckt sich die Verlängerung 38 radial wenigstens so weit wie die Wälzkörper 18. Die Verlängerung 38 kann sich aber beispielsweise auch bis zu einem Mittelbereich der Ankerplatte 28 erstrecken oder aber auch bis zu deren radial äußerem Rand. Ebenso kann sich die Verlängerung beispielsweise auch radial so weit erstrecken wie eine Verschraubung des Außenrings mit der Anschlusskonstruktion 22 oder auch wie der Außenring selber. Es liegt also eine axiale Überdeckung zwischen der Verlängerung 38 und der Ankerplatte 28 sowie einem äußersten Teilbereich des ersten Lagerelements 12 vor. Damit ist die Lageranordnung 10 besonders kompakt und es kann zudem eine vorteilhafte Anordnung und Größe jeweiliger im Reibschluss kontaktierter Reibflächen erzielt werden.

Es wird so eine besonders große Reibfläche zwischen Reibbelag 30 und Gegenfläche 34 zur Verfügung gestellt, welche zudem einen besonders großen Hebelarm bezüglich der Längsachse 16 hat. Dadurch kann bei gleicher Anpresskraft der Federelemente 44 ein besonders hohes die Rotation hemmendes Reibmoment bzw. Bremsmoment bereitgestellt werden bzw. bei gleichem hemmenden Reibmoment wird nur eine geringe Anpresskraft benötigt. Dadurch kann der Elektromagnet 36 besonders klein und schwach sein und/oder die Anforderungen an die Genauigkeit der Einhaltung einer Größe eines Spalts 40 zwischen Elektromagnet 36 und Ankerplatte 28 im Zustand, bei welchem ein Reibschluss vorliegt, kann besonders niedrig sein. Der Spalt 40 ist nämlich eine maßgebliche Größe dafür, wie stark der Elektromagnet 36 sein muss, um die Anpresskraft der Federelemente 44 zum Lösen des Reibschlusses überwinden zu können. Vorliegend ist der Spalt 40 beispielsweise nur wenige zehntel Millimeter groß.

Durch die einstückig mit dem restlichen zweiten Lagerelement 14 ausgebildete Verlängerung 38 kann beispielsweise auf eine separate Druckscheibe verzichtet werden. Diese Druckscheibe wird üblicherweise mittels eines Gewindes mit dem zweiten Lagerelement 14 verbunden, um den Spalt 40 einstellen zu können. Nach der Einstellung wird das Gewinde zur Festlegung der Position der Druckscheibe verklebt. Sowohl auf diese Einstellung als auch auf die Fertigung jeweiliger Gewinde und Montage separater Druckscheiben kann bei der Lageranordnung 10 also verzichtet werden. Dadurch ist die Lageranordnung 10 sowohl besonders kostengünstig und schnell zu fertigen als auch zu montieren. Auch eine Wartung ist so einfacher. Zudem ist keine Schulung des Monteurs zur korrekten Einstellung des Spalts 40 notwendig, da dieser konstruktiv vorgegeben ist und jeweilige Fertigungstoleranzen des Spalts 40 durch den Elektromagneten 36 aufgrund der geringen notwendigen Anpresskraft der Bremsvorrichtung 24 auch bei geringer Leistung noch gut kompensieren kann.

Die Anordnung der Lageranordnung 10 kann auch derart umgedreht werden, dass der Innenring untenliegend mit dem darunter befindlichen Ausleger verbunden wird. In dem Fall kann eine Befestigungsmutter von oben eingeschraubt werden. Ein Lagergehäuse wird dann an der Oberseite mit einem Deckenrohr bzw. mit einem darüber ausliegenden Ausleger verbunden. Die Bremsvorrichtung 24 kann in diesem Fall unten in dem äußeren Lagerring bzw. dem Lagergehäuse integriert sein.

### Bezugszeichenliste

- 10: Lageranordnung
- 12: erstes Lagerelement
- 14: zweites Lagerelement
- 16: Längsachse
- 18: Wälzkörper
- 20: Lagerring
- 22: Anschlusskonstruktion
- 24: Bremsvorrichtung
- 26: Bremselement
- 28: Ankerplatte
- 30: Reibbelag
- 32: Führungsbolzen
- 34: Gegenfläche
- 36: Elektromagnet
- 38: Verlängerung
- 40: Spalt
- 42: Verstellvorrichtung
- 44: Federelement

## Patentansprüche

1. Lageranordnung (10) mit wenigstens einem ersten Lagerelement (12) und einem zweiten Lagerelement (14), welche entlang einer gemeinsamen Längsachse (16) relativ rotierbar zueinander miteinander verbunden sind, wobei die Lageranordnung (10)
eine Bremsvorrichtung (24) umfasst, welche die relative Rotation der beiden Lagerelemente (12, 14) zueinander mittels einer durch die Bremsvorrichtung (24) erzeugten Reibkraft hemmt, wobei
die Bremsvorrichtung (24) ein mit dem ersten Lagerelement (12) verbundenes Bremselement (26), eine mit dem zweiten Lagerelement (14) verbundene Gegenfläche (34) und wenigstens ein Federelement (44) umfasst, welches das Bremselement (26) zur Erzeugung eines Reibschlusses gegen die Gegenfläche (34) mit einer Federkraft presst, und
eine betätigbare Verstellvorrichtung (42), mittels welcher eine Anpresskraft, mit welcher das Bremselement (26) aufgrund des Federelements (44) gegen die Gegenfläche (34) presst, zur Modifizierung der bei der relativen Rotation der beiden Lagerelemente (12, 14) zueinander wirkenden Bremskraft reduzierbar ist, wobei
die Gegenfläche (34) auf einer quer, insbesondere rechtwinkelig, zur Wirkrichtung der Anpresskraft ausgerichteten Verlängerung (38) des zweiten Lagerelements (14) ausgebildet, wobei die Verlängerung (38) einstückig mit dem zweiten Lagerelement (14) ausgebildet ist.

2. Lageranordnung (10) nach Anspruch 1, wobei
das Bremselement (26) eine Ankerscheibe (28) und eine darauf ausgebildete Reibfläche umfasst, wobei die Ankerscheibe (28) mittels wenigstens eines Führungselements (32) verdrehfest aber axial entlang der Längsachse (16) beweglich mit dem ersten Lagerelement (12) verbunden ist.

3. Lageranordnung (10) nach Anspruch 2, wobei
die Verstellvorrichtung (42) einen Elektromagneten (36) umfasst, mittels welchem die Ankerscheibe (28) entgegen der Federkraft axial bewegbar ist.

4. Lageranordnung (10) nach einem der Ansprüche 2 oder 3, wobei
das wenigstens eine Federelement (44) im Wesentlichen auf dem gleichen Durchmesser wie das wenigstens eine Führungselement (32) angeordnet ist.

5. Lageranordnung (10) nach einem der vorhergehenden Ansprüche, wobei
eines der beiden Lagerelement (12, 14) als Innenring und das andere der beiden Lagerelement (12, 14) als Außenring ausgebildet ist.

6. Lageranordnung (10) nach einem der vorhergehenden Ansprüche, wobei
die Verlängerung (38) als Absatz an dem zweiten Lagerelement (14), insbesondere an dem als Innenring ausgebildeten zweiten Lagerelement (14), ausgebildet ist.

7. Lageranordnung (10) nach einem der vorhergehenden Ansprüche, wobei
ein Übergang zwischen der Verlängerung (38) und dem übrigen zweiten Lagerelement (14) gekrümmt oder winkelig ausgebildet ist.

8. Lageranordnung (10) nach einem der vorhergehenden Ansprüche, wobei
sich die Verlängerung (38) und/oder die Gegenfläche (34) radial, insbesondere im rechten Winkel zur Längsachse (16), mit ihrer Haupterstreckungsfläche erstrecken.

9. Lageranordnung (10) nach einem der vorhergehenden Ansprüche, wobei
die Gegenfläche (34) und/oder eine korrespondierende Reibfläche des Reibelements (26) in einem radial äußeren Bereich der Lageranordnung (10) angeordnet sind.

10. Lageranordnung (10) nach einem der vorhergehenden Ansprüche, wobei
sich das zweite Lagerelement (14), insbesondere dessen Verlängerung (38), im Wesentlichen radial nach außen höchstens genauso weit erstreckt wie das erste Lagerelement (12) und/oder das Bremselement (26), insbesondere dessen Ankerscheibe (28).

11. Lageranordnung (10) nach einem der vorhergehenden Ansprüche, wobei
die Verstellvorrichtung (24) eine Anzeigevorrichtung umfasst, welche dazu ausgebildet ist, eine Betätigung der Verstellvorrichtung (24) anzuzeigen, wobei die Anzeigevorrichtung vorzugsweise gemeinsam mit dem Elektromagneten der Verstellvorrichtung an dem ersten Lagerelement (12) angeordnet ist.
